Europäisches Patentamt

European Patent Office

Office européen des brevets

(19)

(11) Veröffentlichungsnummer: **0 087 424 B1**

# EUROPÄISCHE PATENTSCHRIFT

(12)

(45) Veröffentlichungstag der Patentschrift:
18.01.89

(51) Int. Cl.⁴: **H 02 M 1/06**, H 02 M 1/08

(21) Anmeldenummer: 82901422.4

(22) Anmeldetag: 07.05.82

(86) Internationale Anmeldenummer:
PCT/HU 82/00023

(87) Internationale Veröffentlichungsnummer:
WO 83/00958 (17.03.83 Gazette 83/7)

(54) INVERTER-SCHALTUNGSANORDNUNG MIT BRÜCKENSCHALTUNG FÜR DIE TRANSFORMATION DER GLEICHSPANNUNG IN EIN- ODER MEHRPHASIGE WECHSELSPANNUNG.

(30) Priorität: 09.09.81 HU 258981

(43) Veröffentlichungstag der Anmeldung:
07.09.83 Patentblatt 83/36

(45) Bekanntmachung des Hinweises auf die Patenterteilung:
18.01.89 Patentblatt 89/3

(84) Benannte Vertragsstaaten:
AT CH DE FR LI

(56) Entgegenhaltungen:
CH-A- 586 477
DE-A- 2 614 607
SE-B- 365 915
SU-A- 229 663
SU-A- 431 602
SU-A- 907 677
US-A- 3 654 541
US-A- 4 068 294

F. Zach "Leistungselektronik" Wien, New York 1979, S. 366-369

(73) Patentinhaber: VILLAMOSIPARI KUTATO INTEZET,
Cservenka Miklos ut 86, H-1158 Budapest (HU)

(72) Erfinder: BOROSS, Béla, Buzogàny utca 5,
H-1149 Budapest (HU)
Erfinder: FÜZESI, Endre, Bimbó ut 53, H-1022 Budapest (HU)
Erfinder: GANSZKY, Károly, Tusnádi ut 47,
H-1125 Budapest (HU)
Erfinder: KONDOR, Tibor, Tusnádi ut 47,
H-1125 Budapest (HU)
Erfinder: MOSONYI, Károly, Dózsa György ut 29,
H-1146 Budapest (HU)
Erfinder: TIHANYI, László, Nagybányai ut 46/a,
H-1025 Budapest (HU)

(74) Vertreter: Lehn, Werner, Dipl.-Ing. et al, Hoffmann, Eitle & Partner Patentanwälte Arabellastrasse 4,
D-8000 München 81 (DE)

**Beschreibung**

Die Erfindung betrifft eine Inverter-Schaltungsanordnung mit Brückenschaltung für die Transformation der Gleichspannung in eine ein- oder mehrphasige Wechselspannung gemäss dem Oberbegriff des Anspruchs 1.

Eine derartige Inverter-Schaltungsanordnung ist aus dem Buch von F. Zach, «Leistungselektronik», Wien New-York, 1979, S. 366–369 bekannt.

Es ist eine wohlbekannte Tatsache, dass die thyristorisierten Energieumwandler, die Inverter, die zeitgemässesten Mittel für die Transformation der Gleichspannung in eine ein- oder mehrphasige Wechselspannung darstellen. Die Schaltung des Hauptstromkreises der Inverter kann im allgemeinen auf die bekannten ein- und zweiwegigen Stromrichterschaltungen zurückgeführt werden. Sollte die Gleichspannung einen verhältnismässig hohen Wert aufweisen, z.B. bei elektrischen Grosseisenbahn-Fahrzeugen oder im Strassenverkehr, wo die Spannung 600 bis 3000 V erreichen kann, scheint die Verwendung der zweiwegigen Schaltungen, der Brückenschaltungen vorteilhaft zu sein. Bei einer ein- oder mehrphasigen Brückenschaltung des Inverters liegt die Gleichspeisespannung an Halbbrücken, die aus zwei periodisch alternierend leitenden, gesteuerten Brückenzweigen bestehen. In den gesteuerten Brückenzweigen sind Thyristoren vorhanden, wobei die Güte und Zuverlässigkeit der Inverter grösstenteils davon abhängig sind, ob es gelingt, die Stromleitung der Thyristoren der alternierend leitenden, gesteuerten Brückenzweige im geeigneten Augenblick durch Zwangskommutation mit einer entsprechenden Sicherheit zu unterbrechen, da widrigenfalls durch die Zündung des Thyristors in dem anderen Brückenzweig der Halbbrücke die Gleichspannungsstromquelle unmittelbar in einen Klemmenkurzschluss gelangt. Dieser eine Betriebsstörung hervorrufende, meistens das Schadhaftwerden und Austausch der Bestandteile mit sich bringende Fehler wird auch Zusammenzündung des Thyristors genannt. Ein Fehler bei der Zwangskommutation, die Zusammenzündung des Thyristors kann – wie es wohl bekannt ist – aus mehreren Gründen entstehen. Er kann infolge der Überlastung des Inverters vorkommen, was mit der Überdimensionierung des Zwangskommutationskreises eliminiert werden kann. Der Fehler kann auch infolge der momentanen oder dauerhaften Änderung der Gleichspannung von bedeutendem Mass auftreten, die im Betrieb der elektrischen Fahrzeuge infolge der in dem Speisenetz auftretenden Überströme, der Abschaltung der Kurzschlüsse, der Prellung der Stromabnehmer und infolge der beim Überfahren einer Streckenspeisungs-Trennstelle ausbleibenden Spannungen recht häufig vorkommt.

Um diese störenden Einflüsse beseitigen zu können, werden die Elemente sowohl des von der Gleichspannung gespeisten Inverters, wie auch der Zwangskommutationsschaltung auf eine höhere Spannung dimensioniert, ausserdem wird im allgemeinen die Grösse der Kondensatoren des Eingangsfilterkreises L–C erhöht. Obzwar ein derartiger Schutz wirksam ist, ist die Kostenauswirkung als nachteilig zu betrachten. Oft trifft man eine Spannungsüberwachung am Kondensator C des Eingangsfilterkreises L–C. Eine andere bekannte Lösung, die Überwachung der Freiwerdezeit der Thyristoren in dem Brückenzweig, d.h. der geplanten Schonzeit, wird nur mitunter verwendet, da diese recht kompliziert ist. Dabei ist die Verwendung einer äusserst viele Bestandteile enthaltenden Kontrollelektronik unerlässlich.

Deshalb wurde der Erfindung das Ziel gesetzt, die Schaltungsanordnung der Inverter, die an der Ausgang- bzw. Eingangseite häufigen energetischen Störungen ausgesetzt sind, derart auszustalten, dass die sich aus den energetischen Störungen, Überlastungen und Änderungen der Eingangsspannung ergebenden Thyristorzusammenzündungen unter Anwendung einer einfachen Lösung vermieden werden. Dabei soll unter Zuhilfenahme der sogenannten Brückenschaltungsanordnungen auch die Überspannungstoleranz der Inverter erhöht werden.

Die Erfindung beruht einerseits auf der Erkenntnis, dass das Löschen der Brückenzweige bzw. der Thyristoren in dem Brückenzweig je Halbperiode unter Zuhilfenahme einer verhältnismässig einfachen Schaltungsanordnung überwacht werden kann, wodurch auch die Betriebsbereitschaft der Inverter mit Brückenschaltung kontrolliert werden kann. Anderseits kann mit der erwähnten Lösung zusammen eine Inverterschaltung gewonnen werden, die eine von der Funktion der Hauptthyristoren unabhängige Zwangskommutationseinheit besitzt, bei der die transformierende Koppelung der Belastung wirtschaftlich äusserst günstig realisiert ist und die von einer hohen Gleichspannung betreibbar ist.

Das erfindungsgemässe Ziel wird bei einer Inverter-Schaltungsanordnung der eingangs genannten Art mit den kennzeichnenden Merkmalen des Anspruchs 1 erzielt.

Besondere Ausführungsformen sind in den abhängigen Ansprüchen gekennzeichnet.

Der Vorteil der erfindungsgemässen Inverter-Schaltungsanordnung besteht darin, dass die den Sperrzustand der Thyristoren feststellende Einheit die Sperrung der je Periode alternierend leitenden Brückenzweige je Halbperiode in einfacher Weise feststellt, wobei sie bei einer unregelmässigen Funktion die weitere Leitung der gesteuerten Brückenzweige unterbindet, wodurch die Zusammenzündung und der Kurzschluss verhindert werden. Sollte die den Inverter speisende Gleichspannung einen hohen Wert aufweisen, wodurch in den gesteuerten Brückenzweigen mehrere in Serie geschaltete Thyristoren erforderlich sind, ist es zweckmässig im Sinne der Erfindung den Sperrzustand sämtlicher Thyristoren zu kontrollieren.

Des weiteren werden unter Anwendung einer äusserst einfachen Methode und einer einfachen Schaltungsanordnung in einer recht wirtschaftlichen Ausführung eine hochwirksame Kontrolle und ein momentanes Eingreifen erreicht.

Vom technischen Standpunkt aus betrachtet weist die Inverter-Schaltungsanordnung den Vorteil auf, dass die Betriebsbereitschaft der Zwangskommutations-Löscheinheit auch dann besteht, wenn die den Sperrzustand feststellende Einheit die Zündung der Thyristoren des gesteuerten Brückenzweiges des Inverters abstellt. Dabei wird eine wirksame Funktion auch dann aufrechterhalten, wenn das Löschen des Thyristores irgendeines gesteuerten Brückenzweiges erfolglos ist. Der wirtschaftliche Vorteil der Verwendung des Transformators besteht darin, dass die Spannung des Löschstromkreises unabhängig von der Grösse des Gleichspannungseinganges gewählt werden kann. Aus diesem Grunde kann der Löschstromkreis, verglichen mit dem Fall, in dem der Löschstromkreis mit dem Hauptstromkreis galvanisch verbunden ist, mit billigeren Bauteilen realisiert werden.

Der weitere Vorteil des unabhängigen Löschstromkreises besteht darin, dass das mit der Speisung entstehende Radiofrequenzgeräusch infolge der Streuungen der induktiven Koppelung einen wesentlich niedrigeren Pegel aufweist.

Des weiteren ist es im Sinne der Erfindung als vorteilhaft zu betrachten, wenn der Transformator der Zwangskommutations-Löscheinheit auch über eine Tertiärwicklung verfügt, wobei der Löschstromkreis an die Sekundärwicklung des Transformators, die Wechselspannungbelastung an die Tertiärwicklung angeschlossen ist. Der Vorteil dieser Lösung besteht darin, dass wenn die Wechselspannung der Belastung von der zur Realisierung des Löschstromkreises erforderlichen wirtschaftlichen Spannungsgrösse abweicht, die Tertiärwicklung die optimale Adaption ermöglicht.

Die Erfindung wird anhand einiger vorteilhaften Ausführungsbeispiele, mit Hilfe der beiliegenden Zeichnungen näher erläutert. Es zeigen

Figur 1 die erfindungsgemässe Schaltungsordnung des Inverters mit Brückenschaltung,

Figur 2 ein weiteres Ausführungsbeispiel der erfindungsgemässen Schaltungsanordnung mit mehreren in Reihe geschalteten Thyristoren je Brückenzweig,

Figur 3 ein Ausführungsbeispiel der das Löschen der Thyristoren steuernden Einheit der erfindungsgemässen Schaltungsanordnung,

Figur 4 gibt ein Beispiel für die Schaltungsanordnung der unabhängigen Zwangskommutations-Löscheinheit der erfindungsgemässen Schaltungsanordnung,

Figur 5 zeigt die erfindungsgemässe Verbindung zwischen der Zwangskommutations-Löscheinheit und der Belastung,

Figur 6 zeigt eine weitere Ausführungsform der erfindungsgemässen Verbindung zwischen der Zwangskommutations-Löscheinheit und der Belastung.

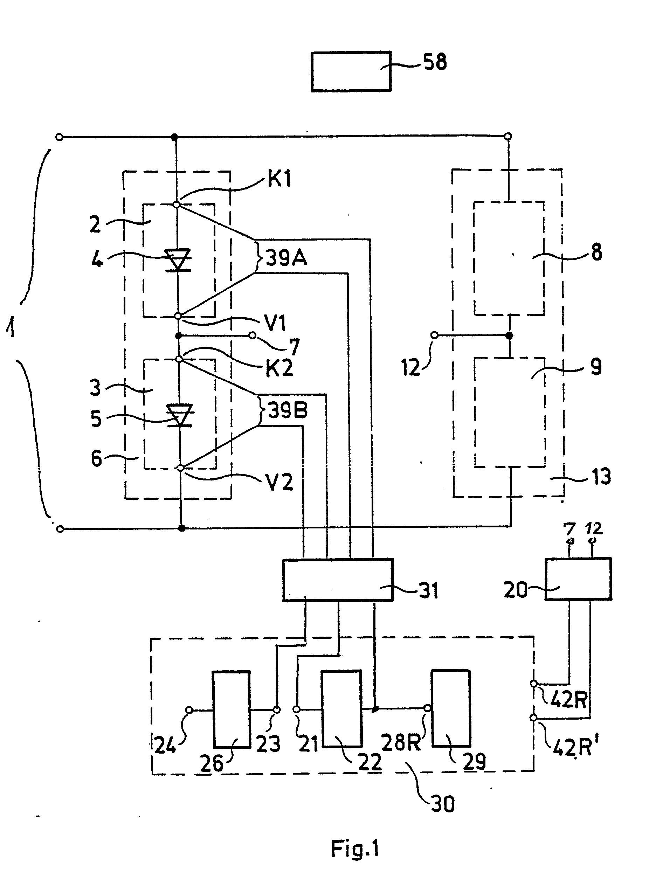

An den Gleichspannungseingang 1 des in der Figur 1 dargestellten, die Gleichspannung in Wechselspannung transformierenden Inverters mit Brückenschaltung sind die erste Halbbrücke 6 und wenigstens eine weitere Halbbrücke 13 angeschlossen. Die erste Halbbrücke 6 besteht aus zwei, einzeln mit Eingangsklemmen K1 und K2 und Ausgangsklemmen V1 und V2 versehen, gesteuerten Brückenzweigen 2, 3, wobei je Brückenzweig 2, 3 mindestens ein Thyristor 4 bzw. 5 vorgesehen ist. Die Halbbrücke 6 ist mit der Mittelpunktklemme 7 versehen. Eine weitere Halbbrücke 13 des Inverters weist die Mittelpunktklemme 12 auf. Der Wechselspannungsverbraucher 58 ist auf an sich bekannte Weise zwischen den Mittelpunktklemmen 7 und 12 angeschlossen. Die Steuerung der Brückenzweige 2, 3 wird von der Steuereinheit 30 vorgenommen, die einen mit einem Signalausgang 21 versehenen Regelstromkreis 22, einen die Zündung der Thyristoren 4, 5 durchführende Zündausgänge 24 und wenigstens einen Zündeingang 23 aufweisenden Zündstromkreis 26 und einen Taktimpulsgenerator 29 enthält. Der Taktimpulsgenerator 29 bestimmt die Frequenz der Wechselspannung des Inverters. Der Taktimpulsgenerator 29 ist mit einer oder mit mehreren Ausgangsklemmen 28R versehen, deren Zahl der Phasenzahl des Inverters entspricht und wobei die Phasenverschiebung der Phasenzahl entsprechend ist. Die Signale an den Ausgangsklemmen steuern den Regelstromkreis 22.

Im Sinne der Erfindung enthält die Schaltungsanordnung eine den Sperrzustand der Thyristoren feststellende Einheit 31. Diese ist über je ein Eingangsklemmenpaar 39A, 39B an die einzelnen Eingangsklemmen K1 und Ausgangsklemmen V1, bzw. an die Eingangsklemmen K2 und Ausgangsklemmen V2 der beiden in Reihe geschalteten, gesteuerten Brückenzweige 2, 3 der ersten Halbbrücke 6 angeschlossen. Die den Sperrzustand der Thyristoren feststellende Einheit 31 ist derart ausgestaltet, dass, wenn die zwei in Reihe geschalteten gesteuerten Brückenzweige 2, 3 in der Leitungsrichtung unterbrochen sind. d.h. die Brückenzweige 2, 3 die Stromleitung verhindern, die Einheit 31 der Steuereinheit 30 einen Befehl zur Freigabe der Zündung der Thyristoren 4, 5 abgibt, wodurch die Steuereinheit 30 an den in der Stromführung an die Reihe kommenden Thyristor 4 bzw. 5 den Zündbefehl abgibt. Sollte einer der Brückenzweige 2, 3 in der Leitungsrichtung in einem eingeschalteten Zustand sein, verbietet die den Sperrzustand der Thyristoren feststellende Einheit 31 über die Steuereinheit 30 die Zündung der Thyristoren 4, 5. Die den Sperrzustand feststellende Einheit 31 kann die Kontrolle erst dann in einer wirksamen Weise durchführen, wenn die Zwangskommutation der Thyristoren 4, 5 von der Zündung der Thyristoren unabhängig vor sich geht, d.h. dass z.B. das Abschalten der Stromleitung des den Strom leitenden Thyristors 4 durch Zwangskommutation von der Zündung des Thyristors 5 unabhängig ist. Daher ist die erfindungsgemässe Schaltungsanordnung mit einer von der Zündung der Thyristoren 4, 5 unabhängigen Zwangskommutations-Löscheinheit 20 versehen, die von der Steuereinheit 30 mit dem Signal mindestens einer Ausgangsklemme 28R des Taktimpulsgenerators 29 synchronisiert gesteuert wird. Aus diesem Grunde ist die Steuereinheit 30 mit den Ausgängen 42R, 42R' versehen, die je Phase separat einen Löschbefehl ausgeben, wobei diese beiden Löschbefehle in den Halbperioden ihren elektrischen Signalpegel ändern und sich gegeneinander in Gegenphase befinden.

Der Vorteil der erfindungsgemässen Schaltungsanordnung zeigt sich in der Einfachheit. Die Sperrspannung der Thyristoren 4, 5 der gesteuerten Brückenzweige 2, 3 in der Leitungsrichtung ist wesentlich höher, als der bei der Stromleitung auftretende Spannungsabfall in der Leitungsrichtung.

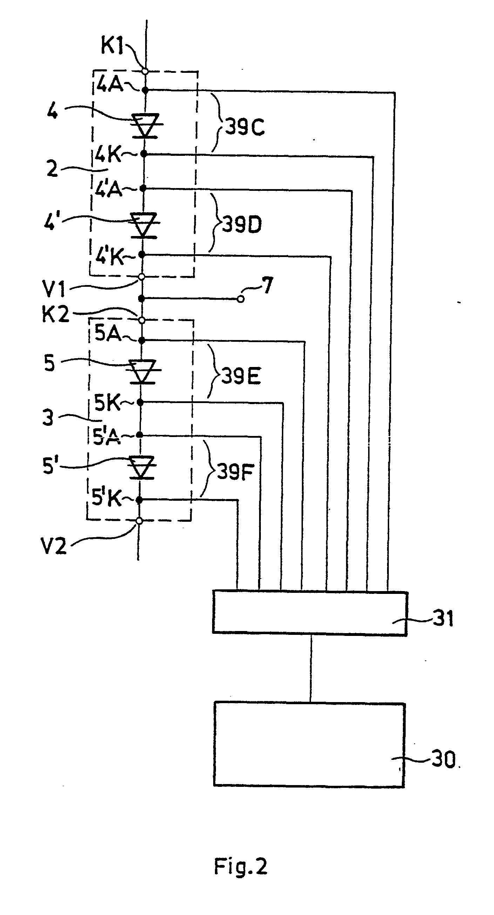

In Figur 2 ist ein weiteres Beispiel für die erfindungsgemässe Schaltungsanordnung dargestellt. Die sich dem Gleichspannungseingang 1 anschliessende Halbbrücke enthält in den in Reihe geschalteten, gesteuerten Brückenzweigen 2, 3 die Thyristoren 4, 4', 5, 5', die einzeln mit der Anode A und der Katode K versehen sind. Zur Kontrolle der Sperrfähigkeit der Brückenzweige 2, 3 in der Leitungsrichtung ist die den Sperrzustand feststellende Einheit 31 über je ein Eingangsklemmenpaar 39C, 39D, 39E, 39F an die Anoden 4A, 4'A, 5A, 5'A und die Katoden 4K, 4'K, 5K, 5'K je eines Thyristors 4, 4', 5, 5' angeschlossen. Bei einem die Stromleitung verhindernden, in der Leitungsrichtung gesperrten Zustand sämtlicher Thyristoren 4, 4', 5, 5' der in Reihe geschalteten beiden gesteuerten Brückenzweige 2, 3 gibt die den Sperrzustand feststellende Einheit 31 einen Befehl an die Steuereinheit 30 zur Freigabe der Zündung der an die Reihe kommenden Thyristoren 4, 4' oder 5, 5' ab. Im Falle, dass irgendein Thyristor 4, 4', 5, 5' in der Leitungsrichtung sich in einem eingeschalteten Zustand befindet, verbietet die den Sperrzustand feststellende Einheit 31 über die Steuereinheit 30 die Ansteuerung des in der Leitungsrichtung unterbrochenen Brückenzweiges 2, 3. Sollte die Grösse der Speisespannung das Vorhandensein mehrerer Thyristoren in den einzelnen Brückenzweigen beanspruchen, kann die gestellte Aufgabe unter Anwendung des in der Figur 2 dargestellten Beispiels gelöst werden, bei dem bei einem erfolglosen Löschen und Schadhaftwerden irgendeines Thyristors 4, 4', 5, 5', oder einer mangelhaften Sperrfähigkeit in der Leitungsrichtung die den Sperrzustand feststellende Einheit 31 die unzulässige Spannungbelastung des unversehrten Thyristors in der Leitungsrichtung und einen eventuellen durchschlagartigen Kurzschluss des Brückenzweiges dadurch verhindert, dass die Zündung sämtlicher Thyristoren unterbunden wird. Infolgedessen gelangt die Eingangsgleichspannung sowohl auf die Thyristoren des unversehrten Brückenzweiges, als auch auch die nicht schadhaft gewordenen Thyristoren des beschädigten Brückenzweiges.

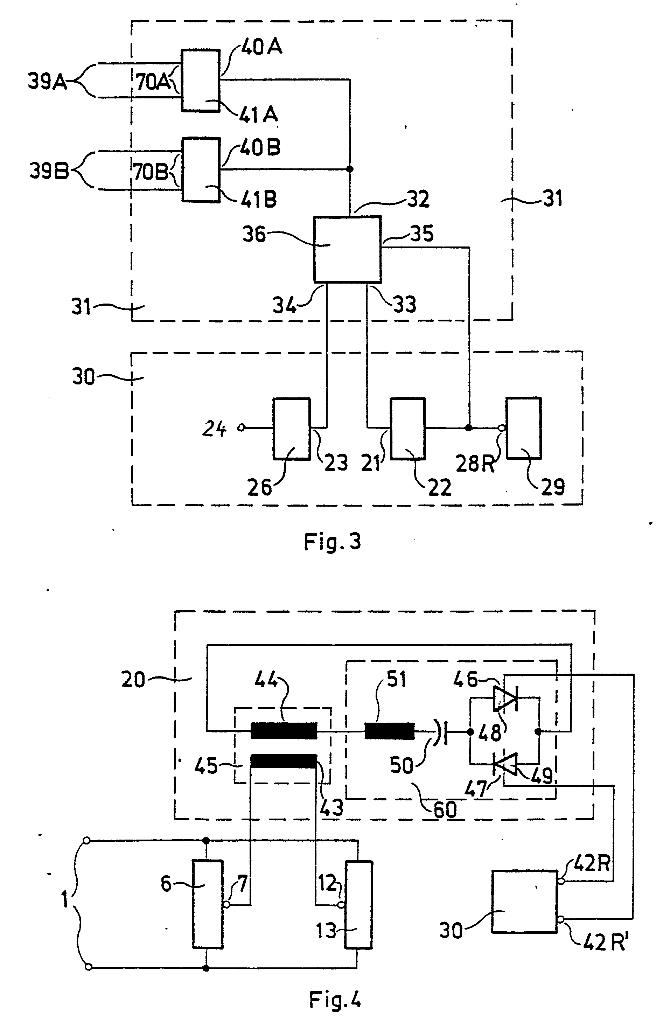

In der Figur 3 ist eine als Beispiel dienende Ausführungsform der erfindungsgemässen, den Sperrzustand des Thyristoren feststellenden Einheit 31 veranschaulicht, der Einfachheit halber für den Fall, in dem die beiden, in Reihe geschalteten Brückenzweige 2, 3 wenigstens einer ersten Halbbrücke 6, ähnlich wie in der Figur 1, jeweils nur einen Thyristor 4, 5 enthalten. Die den Sperrzustand feststellende Einheit 31 enthält je einen potentialtrennenden Detektor 41A, 41B und mindestens ein Phasentor 36. Der Eingang 70A, 70B je eines Detektors 41A, 41B ist mit je einem Eingangsklemmenpaar 39A, 39B verbunden. An dem Ausgang 40A, 40B je eines Detektors 41A, 41B erscheint je nach Vorhandensein oder Fehlen der auf den Eingang 70A, 70B gelangenden Spannung eine den logischen Signalpegel wechselnde Spannung. Das vorhandene, mindestens eine Phasentor 36 weist einen Dateneingang 32, einen Signaleingang 33, einen Befehlsausgang 34 und einen Taktimpulseingang 35 auf. Bei dem hier veranschaulichten Ausführungsbeispiel lässt das Phasentor 36 das Erscheinen des zu dem Signaleingang 33 gelangenden Signals an dem Befehlausgang 34 solange zu, wie an dem Dateneingang 32 der gegebene Signalpegel vorhanden ist und das auf den Taktimpulseingang abgegebene Signal dies zulässt. Der Ausgang 40A, 40B je eines Detektors 41A, 41B geht auf den Dateneingang 32 des Phasentors 36. Der Signaleingang 33 ist an den Signalausgang 21 des Regelstromkreises 22 angeschlossen, während der Taktimpulseingang 35 wenigstens an eine Ausgangsklemme 28R des Taktimpulsgenerators 29 angeschlossen ist. Der Befehlausgang 34 ist mit dem Zündeingang 23 des Zündstromkreises verbunden. Bei dem hier dargestellten Ausführungsbeispiel kann das Signal des Signalausgangs 21 des Regelstromkreises 22 erst dann über den Befehlausgang 34 zu dem Signaleingang des Zündstromkreises 26 gelangen, wenn das Phasentor 36 über die Eingänge 70A, 70B der Detektoren 41A, 41B den in der Leitungsrichtung gesperrten Zustand der Brückenzweige 2, 3 wahrnimmt, d.h. über die Ausgänge 40A, 40B das entsprechende Signal am Dateneingang 32 des Phasentors 36 empfängt. Das Signal des Befehlausgangs 34 wird von dem Taktimpulsgenerator 29 über den Taktimpulseingang 35 bei dem nächsten Taktimpulswechsel gelöscht. Darauffolgend überprüft die den Sperrzustand feststellende Einheit 31 wiederholt den Zustand der gesteuerten Brückenzweige 2, 3 in der Leitungsrichtung, und solange kein gesperrter Zustand in der Leitungsrichtung angezeigt wird, wird die Steuerung der Brückenzweige 2, 3 bzw. die Zündung der Thyristoren 4, 5 unterbunden.

Die Steuerung der gesteuerten Brückenzweige bzw. der Thyristoren der Brückenzweige des Inverters mit der erfindungsgemässen Brückenschaltung bezüglich der Leitung bzw. des Sperrens, sowie das Unterbinden der Funktion bis zur Wiederherstellung der Sperrzustände kann erst dann realisiert werden, wenn die Inverterschaltung zwecks einer Zwangskommutations-Löschung der Thyristoren 4, 5 der gesteuerten Brückenzweige 2, 3 mit einer, von der Zündung der Thyristoren 4, 5 unabhängigen Zwangskommutation-Löscheinheit 20 versehen ist. Die Figur 4 gibt ein Beispiel für die erwähnte erfindungsgemässe Schaltungsanordnung. Im Sinne dieser Darstellung besteht die Löscheinheit 20 aus dem Transformator 45 und dem Löschstromkreis 60. Der Transformator 45 ist mit der Primärwicklung 43 und mit wenigstens einer Sekundärwicklung 44 versehen. Die Primärwicklung 43 ist zwischen der Mittelpunktklemme 7 der ersten Halbbrücke 6 und der Mittelpunktklemme 12 der zweiten Halbbrücke 13 eingeschaltet. Der Sekundärwicklung 44 schliesst sich der Löschstromkreis 60 an, der aus einer Reihenschaltung von zwei gegenparallel geschalteten Hilfsthyristoren 48, 49, einem Löschkondensator 50 und einer Induktivität 51 besteht. Die Hilfsthyristoren 48, 49 sind einzeln mit den Steuerelektroden 46, 47 versehen, die mit den den Löschbefehl gebenden Ausgängen 42R, 42R' der Steuereinheit 30 verbunden sind. Der Löschkondensator 50 nimmt die zum Zwangskommutationsprozess erforderliche Energie über den Transformator 45 auf, und zwar über die Mittelpunktklemmen 7 und 12, durch die Zündung des der Polarität entsprechenden Hilfsthyristors 48 oder 49. Der Löschkondensator 50 führt die zum Zwangskommutationslöschen erforderliche Energie durch die Zündung des entsprechenden Hilfsthyristors 48 oder 49, in einer von dem aus dem Löschkondensator 50 und der in Reihe geschalteten Induktivität 51 bestehenden Schwingkreis bestimmten Weise, über den Transformator 45, den Mittelpunkt 7 und die Mittelpunktklemme 12 zu den Brückenzweigen zurück. Dadurch wird der eben leitende Thyristor 4 oder 5 gelöscht. Während dieses Prozesses wechselt in einer von dem Schwingkreis bestimmten Weise die Spannungspolarität des Löschkondensators 50. Der Energieverlust wird über den Transformator 45 im Laufe der Zündung des entsprechenden Thyristors 4, 5 ersetzt. Die Voraussetzung dafür besteht darin, dass die Hilfsthyristoren 48, 49 ein der Funktionsfrequenz des Inverters entsprechendes, eine Halbperiode dauerndes Zündsignal erhalten. Um das gesetzte Ziel erreichen zu können, ist die Steuereinheit 30 mit den Ausgängen 42R, 42R' versehen, die je Phase separat in den Halbperioden einen den Signalpegel ändernden, gegeneinander in der Gegenphase wirkenden Löschbefehl ausgeben.

Die als Beispiel ausgeführte erfindungsgemässe Schaltungsanordnung sichert den synchronisierten Betrieb der den Sperrzustand feststellenden Einheit 31 und der Löscheinheit 20, da im Moment des Anfanges der Zwangskommutation der Taktimpulsgenerator 29 wenigstens über eine Ausgangsklemme 28R und den Taktimpulseingang 35 des Phasentors das Signal des Befehlausganges 34 der den Sperrzustand feststellenden Einheit 31 löscht und die Ausgabe des neuen Befehlsignals erst dann zulässt, wenn die Einheit 31 den in der Leitungsrichtung gesperrten Zustand der gesteuerten Brückenzweige 2, 3 wahrnimmt. Der Vorteil der erfindungsgemässen Schaltungsanordnung liegt darin, dass die Löscheinheit 20 transformatorisch von dem Gleichspannungseingang 1 getrennt ist, wodurch die Betriebsspannung der Elemente des Löschstromkreises 60 infolge der transformatorischen Übertragung, unabhängig von der Höhe der Gleichspannung des Einganges, technisch und wirtschaftlich am günstigsten gewählt werden kann.

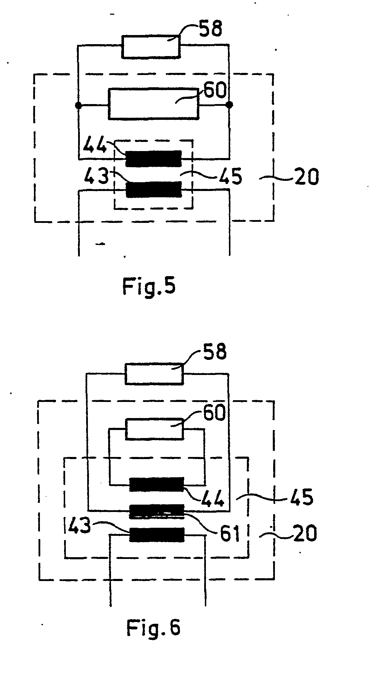

Der weitere bedeutende Vorteil der Schaltungsanordnung der im Sinne der Erfindung unabhängigen Zwangskommutation-Löscheinheit 20 besteht darin, dass die Vereinfachung der Verbindung zwischen der Wechselspannungsbelastung und dem Inverter ermöglicht wird, ein Beispiel dafür ist in Figur 5 veranschaulicht. Bei dem hier dargestellten Ausführungsbeispiel können der Löschstromkreis 60 und die Wechselspannungsbelastung 58 parallel mit der Sekundärwicklung 44 des Transformators 45 geschaltet werden, wodurch der Transformator 45 eine doppelte Aufgabe zu erfüllen fähig ist und dadurch die Gestaltungskosten herabsetzt. Dieser Vorteil kann auch in jenem Fall ausgenützt werden, wenn der Löschstromkreis 60 von der Belastung 58 mit Wechselspannung galvanisch getrennt werden muss. Aus diesem Grunde ist bei dem in der Figur 6 dargestellten Ausführungsbeispiel der Transformator 45 mit einer Tertiärwicklung 61 versehen, wobei der Löschstromkreis 60 der Sekundärwicklung 44 und die Belastung 58 der Tertiärwicklung 61 angeschlossen ist.

Die erfindungsgemässe Schaltungsanordnung weist insbesondere bedeutende Vorteile bei einem einphasigen Inverter mit geteilter Batterie auf, bei dem wenigstens eine weitere zweite Halbbrücke 13 aus den beiden, in Reihe geschalteten Brückenzweigen 8, 9 besteht und je Brückenzweig 8, 9 mindestens je ein Kondensator 10, 11 vorgesehen ist.

**Patentansprüche**

1. Inverter-Schaltungsanordnung zur Transformation einer Gleichspannung in eine ein- oder mehrphasige Wechselspannung mit

a) einer Brückenschaltung, die wenigstens zwei aus je zwei in Reihe geschalteten Brückenzweigen (2, 3; 8, 9) bestehende Halbbrücken (6; 13) parallel zum Gleichspannungseingang (1) umfasst, wobei die Brückenzweige (2, 3) wenigstens einer Halbbrücke (6) wenigstens einen Thyristor (4, 5) enthalten, und die Mittelpunktklemmen (7, 12) der Brückenzweige an den Wechselspannungsverbraucher (58) angeschlossen sind,

b) einer Steuereinheit (30) zur Steuerung der Brückenzweige, enthaltend einen die Frequenz und Phasenlage der Wechselspannung bestimmenden Taktimpulsgenerator (29), der über einen Regelstromkreis (22) einen Zündstromkreis (26) steuert, und

c) einer Löscheinheit (20) zur jeweiligen Zwangslöschung der Thyristoren eines Brückenzweiges, die von der Steuereinheit (30) über deren Ausgänge (42R, 42R') synchron mit dem Taktimpulsgenerator (29) gesteuert wird, wobei je Phase und Halbperiode Löschbefehle für die betreffenden Brückenzweige ausgegeben werden, dadurch gekennzeichnet, dass

d) die Löscheinheit (20) von der Zündung der Thyristoren (4, 5) unabhängig steuerbar ist und einen Transformator (45) aufweist, dessen Primärwicklung (43) mit den Mittelpunktklemmen (7, 12) der Brückenzweige verbunden ist und dessen Sekundärwicklung (44) mit einem Löschstromkreis (60) in Reihe geschaltet ist,

e) eine den Sperrzustand der Thyristoren (4, 5) feststellende Einheit (31) vorgesehen ist, die mit der Steuereinheit (30) verbunden ist und je einen an die mit Thyristoren versehenen Brückenzweige angeschlossenen Detektor (41A, 41B) aufweist, die an ihren Ausgängen auf das Vorhandensein der Spannung am zugehörigen Brückenzweig ansprechen und ein Signal abgeben, und

f) die den Sperrzustand feststellende Einheit (31) ein Phasentor (36) aufweist, das die Weitergabe der Zündimpulse an die Thyristoren (4, 5) eines Brückenzweiges (2, 3) nur dann zulässt, wenn durch die Detektoren (41A, 41B) eine Unterbrechung beider Brückenzweige festgestellt ist.

2. Schaltungsanordnung nach Anspruch 1, dadurch gekennzeichnet,

dass die beiden, in Reihe geschalteten gesteuerten Brückenzweige (2, 3) der ersten Halbbrücke (6) jeweils mehrere, in Reihe geschaltete Thyristoren (4, 4', 5, 5') enthalten,

dass die Detektoren (41A, 41B) der den Sperrzustand feststellenden Einheit (31) über je ein Eingangsklemmenpaar (39C, 39D, 39E, 39F) an die Anoden und an die Kathoden jedes der Thyristoren (4, 4', 5, 5') angeschlossen sind,

dass das Phasentor (36) bei festgestellter Unterbrechung sämtlicher Thyristoren (4, 4', 5, 5') der beiden in Reihe geschalteten gesteuerten Brückenzweige (2, 3) ein Signal zur Zündung der Thyristoren (4, 4', 5, 5') und bei festgestellter Leitung eines der Thyristoren (4, 4', 5, 5') des gesteuerten Brückenzweiges (2, 3) ein die Zündung der Thyristoren verhinderndes Sperrsignal an die Steuereinheit (30) abgibt (Fig. 2 und 3).

3. Schaltungsanordnung nach Anspruch 1 oder 2, dadurch gekennzeichnet,

dass das Phasentor (36) einen Dateneingang (32), einen Signaleingang (33), einen Befehlausgang (34) und einen Taktimpulseingang (35) aufweist und das Phasentor (36) derart ausgebildet ist, dass ein Signal des Signaleingangs (33) bei anliegendem Sperrsignal am Dateneingang (32) und bei einem am Taktimpulseingang (35) anliegendem Signal den Befehlsausgang sperrt, und

dass der Ausgang (40A, 40B) jedes Detektors (41A, 41B) mit dem Dateneingang (32) des Phasentors (36), dessen Signaleingang (33) mit dem Signalausgang (21) des Regelstromkreises (22) und dessen Taktimpulseingang (35) mit wenigstens einer der Ausgangsklemmen (28R) des Taktimpulsgenerators (29) verbunden ist, während der Befehlausgang (34) des Phasentors (36) mit dem Zündeingang (23) des Zündstromkreises (26) verbunden ist (Fig. 3).

4. Schaltungsanordnung nach einem der Ansprüche 1 bis 3, dadurch gekennzeichnet,

dass die Löscheinheit (20) einen aus einer Primärwicklung (43) und aus mindestens einer Sekundärwicklung (44) bestehenden Transformator (45) aufweist,

dessen Primärwicklung (43) zwischen die Mittelpunktklemmen (7, 12) der Brückenzweige geschaltet und an dessen Sekundärwicklung (44) ein Löschstromkreis (60) angeschlossen ist,

dass der Löschstromkreis aus wenigstens zwei gegenparallel geschalteten Hilfsthyristoren (48, 49) mit einzelnen Steuerelektroden (46, 47) und einem mit diesen in Reihe geschalteten Löschkondensator (50) und einer weiter in Reihe geschalteten Induktivität (51) besteht, und

dass die Steuerelektroden (46, 47) der Hilfsthyristoren (48, 49) an je einen, einen Löschbefehl abgebenden Eingang (42R, 42R') der Steuereinheit (30) angeschlossen sind (Fig. 4).

5. Schaltungsanordnung nach Anspruch 4, dadurch gekennzeichnet, dass der Wechselspannungsverbraucher (58) mit dem Löschstromkreis (60) der Löscheinheit (20) parallel geschaltet ist und an die Sekundärwicklung (44) des Transformators (45) angeschlossen ist.

6. Schaltungsanordnung nach Anspruch 4, dadurch gekennzeichnet, dass der Transformator (45) der Löscheinheit (20) eine Tertiärwicklung (61) aufweist und der Wechselspannungsverbraucher (58) an die Tertiärwicklung (61) angeschlossen ist (Fig. 6).

**Claims**

1. Inverter circuit arrangement for transforming a DC voltage into a single or multiphase alternating voltage including:

a) a bridge circuit including at least two half bridges (6; 13) arranged parallel to the DC voltage input (1), each consisting of two series connected bridge arms (2, 3; 8, 9) the bridge arms (2, 3) of at least one half bridge (6) including at least one thyristor (4, 5) and the middle point terminals (7, 12) of the bridge arms being connected to the AC voltage load (58),

b) a control unit (30) for controlling the bridge arms, comprising a clock pulse generator (29) for determining the frequency and phase position and for controlling a firing circuit (26) via a control circuit (22) and

c) a quenching unit (20) for respective forced quenching of the thyristors of a bridge arm, which is controlled synchronously with the clock pulse generator (29), by the control unit (30) via its outputs (42R, 42R') whereby quenching commands for the relevant bridge arms are output according to phase and half periods characterized in that

d) the quenching unit (20) is controllable independent of the firing of the thyristors (4, 5) and includes a transformer (45) whose primary winding (43) is connected to the middle point terminals (7, 12) of the bridge arms and whose secondary winding (44) is connected in series with a quenching circuit (60), in that

e) a unit (31) is provided for determining the blocking state of the thyristors (4, 5), said unit (31) being connected to the control unit (30) and having a detector (41A, 41B) connected to each of the bridge arms provided with thyristors, said bridge arms responding to the presence of the voltage on the corresponding bridge arm on their outputs and outputting a signal and in that

f) the unit (31) for detecting the blocking state has a phase gate (36) which allows the transfer of the firing pulses to the thyristors (4, 5) of a bridge arm (2, 3) only if a disconnection of both bridge arms is detected by the detectors (41A, 41B).

2. Circuit arrangement according to claim 1 characterized in that
both of the controlled, series connected bridge arms (2, 3), of the first half bridge (6) each comprise a plurality of series connected thyristors (4, 4', 5, 5') in that
the detectors (41A, 41B) of the unit (31) for detecting the blocking state are each connected to the anodes and the cathodes of each of the thyristors (4, 4', 5, 5') via a pair of input terminals (39C, 39D, 39E, 39F), and in that
the phase gate (36) supplies a signal for firing the thyristors (4, 4', 5, 5') when the disconnection of all thyristors (4, 4', 5, 5') of both the series connected, controlled bridge arms (2, 3) is detected and supplies a blocking signal for preventing the firing of the thyristors when the conduction of one of the thyristors (4, 4', 5, 5') of the controlled bridge arms (2, 3) is detected (Figs. 2 and 3).

3. Circuit arrangement according to claims 1 or 2 characterized in that
the phase gate (36) has a data input (32), a signal input (33), a command output (34) and a clock pulse input (35) and the phase gate (36) is arranged so that a signal of the signal input (33) blocks the command output when a blocking signal is present at the data input (32) and when a signal is present on the clock pulse input (35) and in that
the output (40A, 40B) of each detector (41A, 41B) is connected to the data input (32) of the phase gate (36) whose signal input (33) is connected to the signal output (21) of the control circuit (22) and whose clock pulse input (35) is connected to at least one of the output terminals (28R) of the clock pulse generator (29) when the command output (34) of the phase gate (36) is connected to the firing input (23) of the firing circuit (26) (Fig. 3).

4. Circuit arrangement according to one of the claims 1 to 3 characterized in that
the quenching unit (22) has a transformer (45) consisting of a primary winding (43) and at least one secondary winding (44), said primary winding (43) being connected between the middle point terminals (7, 12) of the bridge arms and a quenching circuit (60) is connected to said secondary winding (44), in that
the quenching circuit consists of at least two inverse parallel connected auxiliary thyristors (48, 49) with individual control electrodes (46, 47) and with a quenching capacitor (50) connected in series with these and with a further series connected inductor (51) and in that
the control electrodes (46, 47) of the auxiliary thyristors (48, 49) are each connected to one input (42R, 42R') of the control unit (30) which supplies a quenching command (Fig. 4).

5. Circuit arrangement according to claim 4 characterized in that the AC voltage load (58) is connected in parallel with the quenching circuit (60) of the quenching unit (20) and is connected to the secondary winding (44) of the transformer (45).

6. Circuit arrangement according to claim 4 characterized in that the transformer (45) of the quenching unit (20) has a tertiary winding (61) and that the AC voltage load (58) is connected to the tertiary winding (61).

**Revendications**

1. Dispositif de circuit convertisseur destiné à la transformation d'une tension continue en une tension alternative monophasée ou polyphasée comportant:
a) un circuit en pont qui comprend au moins deux demi-ponts (6; 13) constitués chacun de deux branches de pont (2, 3; 8, 9) montées en série, en parallèle avec l'entrée de tension continue, les branches de pont (2, 3) d'au moins un demi-pont (6) comportant au moins un thyristor (4, 5) et les bornes centrales (7, 12) des branches de pont étant connectées à l'organe utilisateur de tension alternative (58);
b) une unité de commande (30) destinée à commander les branches de pont, contenant un générateur d'impulsions cadencées (20) déterminant la fréquence et la position des phases de la tension alternative, qui commande un circuit de déclenchement (26) par l'intermédiaire d'un circuit de régulation (22); et
c) une unité d'extinction (20) destinée à l'extinction forcée des thyristors d'une branche de pont qui est commandée par l'unité de commande (30) par l'intermédiaire de ses sorties (42R, 42R') en synchronisme avec le générateur d'impulsions cadencées (29) des instructions d'extinction destinées à la branche de pont concernée étant émises pour chaque phase à chaque demi-période, caractérisé en ce que:
d) l'unité d'extinction (20) est susceptible d'être commandée indépendamment de l'allumage des thyristors (4, 5) et présente un transformateur (45) dont le bobinage primaire (43) est relié aux bornes centrales (7, 12) des branches de pont et dont le bobinage secondaire (44) est monté en série avec un circuit de courant d'extinction (60);
e) on prévoit une unité (31) maintenant l'état bloqué des thyristors (4, 5) qui est reliée à l'unité de commande (30) et qui présente un détecteur (41A, 41B) raccordé à chacune des branches de pont munies de thyristors, lesquels détecteurs réagissent à leurs sorties à l'existence de la tension sur la branche de pont considérée et délivrent un signal, et en ce que
f) l'unité (31) maintenant l'état bloqué présente une porte de phases (36) qui n'autorise la transmission des impulsions d'extinction aux thyristors (4, 5) d'une branche de pont (2, 3) que lorsqu'une interruption des deux branches de pont est constatée par les détecteurs (41A, 41B).

2. Dispositif de circuit selon la revendication 1, caractérisé en ce que:
les deux branches de pont (2, 3) commandées montées en série du premier demi-pont (6) contiennent chacun des thyristors montés en série (4, 4', 5, 5');
la porte de phases (36) dans le cas où est constatée l'interruption de l'ensemble des thyristors (4, 4', 5, 5') des deux branches de pont (2, 3) commandées montées en série, délivre un signal destiné au déclenchement des thyristors (4, 4', 5, 5') et en ce que dans le cas où l'on constate que l'un des thyristors (4, 4', 5, 5') de la branche de pont commandée (2, 3) est en situation de conduction établie, elle délivre à l'unité de commande (30) un signal de blocage empêchant l'allumage des thyristors (figures 2 et 3).

3. Dispositif de circuit selon la revendication 1 ou 2, caractérisé en ce que:

la porte de phases présente une entrée de données (32), une entrée de signal (33), une sortie d'instructions (34) et une entrée d'impulsions cadencées (35) et que la porte de phases (36) est constituée de façon telle qu'un signal de l'entrée de signal (33) verrouille la sortie d'instructions dans le cas où un signal de verrouillage existe à l'entrée de données (32) et où un signal existe à l'entrée d'impulsions cadencées (35), et que la sortie (40A, 40B) de chaque détecteur (41A, 41B) est reliée à l'entrée de données (32) de la porte de phases (36) dont l'entrée de signal (33) est reliée à la sortie de signal (21) et dont l'entrée d'impulsions cadencées (35) est reliée à au moins une des bornes de sortie (28R) du générateur d'impulsions cadencées (29), tandis que la sortie d'instructions (34) de la porte de phases (36) est reliée à l'entrée de déclenchement (26) (figure 3).

4. Dispositif de circuit selon une des revendications 1 à 3, caractérisé en ce que l'unité d'extinction (20) présente un transformateur (45) constitué par un bobinage primaire (43) et par un bobinage secondaire (44),

dont le bobinage primaire (43) est connecté entre les bornes principales (7, 12) des branches de pont et au bobinage secondaire (44) auquel est raccordé un circuit de courant d'extinction,

en ce que le circuit d'extinction est constitué par au moins deux thyristors auxiliaires (48, 49) couplés anti-parallèles, comportant des électrodes de commande (46, 47) individuelles et par un condensateur d'extinction (50) monté en série avec ceux-ci et d'une inductance (51) branchée également en série;

et en ce que les électrodes (46, 47) des thyristors (48, 49) sont connectées chacune à une entrée (42R, 42R') délivrant une instruction d'extinction, de l'unité de commande (figure 4).

5. Dispositif de circuit selon la revendication 4, caractérisé en ce que l'organe utilisateur de la tension alternative (58) est branché en parallèle avec le circuit d'extinction (60) de l'unité d'extinction (20) et est raccordé au bobinage secondaire (44) du transformateur (45).

6. Dispositif de circuit selon la revendication 4, caractérisé en ce que le transformateur (45) de l'unité d'extinction (20) présente un bobinage tertiaire (61) et en ce que l'organe utilisateur de la tension alternative est branché sur le bobinage tertiaire (61) (figure 6).

Fig.1

Fig.2

Fig. 3

Fig. 4

Fig.5

Fig.6